# EUROPEAN PATENT APPLICATION

(11) **EP 2 728 897 A1**
(43) Date of publication of application: **07.05.2014**
(21) Application number: 12190895.8
(22) Date of filing: 31.10.2012
(51) Int. Cl.: H04N 21/4788, H04N 21/41, H04N 21/858

(54) **Video-annotation entry and display apparatus**

(71) Applicant: BlackBerry Limited, Waterloo, ON N2K 0A7 (CA)
(72) Inventor: Adams, Neil Patrick, Waterloo, Ontario N2L 3W8 (CA)
(74) Representative: Greenaway, Martin William

(57) **Abstract**

An apparatus (such as but not limited to a portable electronics device) having a display, a user input interface, a wireless communications interface, and a control circuit operably coupled to the foregoing. The control circuit is configured to provide information on the display regarding a video being presently rendered on the apparatus and/or on another physically and logically discrete apparatus (such as but not limited to a broadcast television receiver or standalone computer). So configured a user can both watch the video while also reviewing the information on their portable electronic device. The information can comprise video-annotation information entered by the user and/or as provided by one or more user contacts.

## Description

### Field of Technology

The present disclosure relates to electronic devices, including but not limited to portable electronic devices having a display and wireless communications capabilities.

### Background

Electronic devices, including portable electronic devices, have gained widespread use and may provide a variety of functions including, for example, telephonic, electronic messaging and other personal information manager (PIM) application functions. Many users rely upon their portable electronic devices to associate with their contacts via, for example, one or more social-media services such as TWITTER^{™}, FACEBOOK^{™}, and so forth. Such association typically includes permitting the user to post their own updated thoughts, images, videos, and so forth and also being timely advised of such content as posted by their contacts.

In many cases, of course, a user's portable electronic device is not the user's only media-consumption platform. For reasons of size, bandwidth, capability, access, and/or cost, for example, a given user may also rely upon one or more other apparatuses that are both physically and logically discrete from the user's portable electronic device. Simple examples in these regards are broadcast television receivers, standalone computers, and so forth. A user might rely upon such ancillary platforms, for example, to view broadcast and/or streaming video content (such as a movie) notwithstanding the present availability of their portable electronic device.

Increasingly, the providers of broadcast/streaming video content also support the opportunity for viewers to express thoughts, pose questions, and so forth while watching the video itself. As one simple example in these regards, a viewer may have the opportunity to use their portable electronic device to text a vote in favor of a participant in a broadcast talent contest that the user is watching on their television. Such facilities, however, are typically designed to handle thousands or even millions of respondents. This approach therefore tends to homogenize the social input and/or to reduce the sharing of any specific input to only a very small subset.

### Brief Description of the Drawings

FIG. 1 is a block diagram in accordance with the disclosure.

FIG. 2 is a block diagram in accordance with the disclosure.

FIG. 3 is a screen shot schematic view in accordance with the disclosure.

FIG. 4 is a screen shot schematic view in accordance with the disclosure.

FIG. 5 is a screen shot schematic view in accordance with the disclosure.

FIG. 6 is a flow diagram in accordance with the disclosure.

### Detailed Description

The following describes an apparatus (such as but not limited to a portable electronics device (including a portable communications device)) having a display, a user input interface, a wireless communications interface, and a control circuit operably coupled to the foregoing. The control circuit is configured to provide information on the display regarding a video being presently rendered on another physically and logically discrete apparatus (such as but not limited to a broadcast television receiver or standalone computer). So configured a user can both consume the video while also entering and/or reviewing the information on their portable electronic device.

By one approach, the displayed information comprises information regarding a plurality of contacts who correspond to the user. This information can comprise, for example, an extent to which each of the contacts has also viewed the video, which of those contacts are presently viewing the video, and so forth.

By another approach, in lieu of the foregoing or in combination therewith, the displayed information can comprise video-annotation information the apparatus receives via the wireless communications interface and as provided, for example, by the user's contacts. These teachings will accommodate considerable flexibility in these regards. For example, the video-annotation information can comprise, in whole or in part, text, file(s), selected graphic elements, and/or links to note but a few.

If desired, these teachings will accommodate also presenting on the display a depiction of where different video annotations from these contacts are included in the video. In such a case the aforementioned control circuit can be configured to detect the user's selection of a particular video-annotation location and responsively cause the rendering of the video on the ancillary platform to switch to the selected particular video-annotation location.

These teachings are highly flexible in practice. Accordingly, the apparatus can readily accommodate receiving video-annotation information from the user themselves (via, for example, the aforementioned user input interface) while the video is being rendered on the physically and logically discrete apparatus. This video-annotation information can be saved for later access by the user and/or can be transmitted and thereby shared with the user's contacts.

As another example of the flexibility of these teachings, the control circuit can also be configured to communicate with the physically and logically discrete apparatus to facilitate the latter co-displaying, for example, selected video-annotation information along with the video. An example in these regards would be to display a textual comment from a contact in conjunction with the display of the video.

So configured, a user can enjoy a well-integrated experience that includes both their portable electronic device as well as an independent video-playback device. These teachings are readily implementable in a cost-effective manner and can serve to greatly leverage the utility and value of numerous existing platforms and services.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

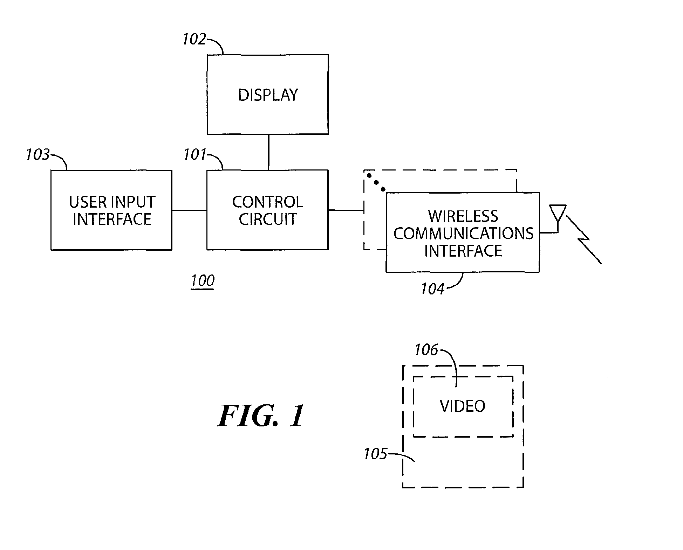

FIG. 1 presents an illustrative example of an apparatus 100 that accords in at least some regards with the present teachings. This apparatus 100 includes a control circuit 101 that operably couples to a display 102, a user input interface 103, and a wireless communications interface 104. Such a control circuit 101 can comprise a fixed-purpose hard-wired platform or can comprise a partially or wholly programmable platform. These architectural options are well known and understood in the art and require no further description here. This control circuit 101 is configured (for example, by using corresponding programming as will be well understood by those skilled in the art) to carry out one or more of the steps, actions, and/or functions described herein.

The display 102 can comprise any display of choice. The user input interface 103 can comprise any of a variety of user-input mechanisms such as, but not limited to, keyboards and keypads, cursor-control devices, a touch-sensitive aspect of the aforementioned display 102, speech-recognition interfaces, gesture-recognition interfaces, and so forth.

The wireless communications interface 104 can similarly comprise any of a variety of very-short range (such as BLUETOOTH^{™}-compatible transceivers), short range (such as any of a variety of 802.11-compatible transceivers), and long range (such as any of a variety of cellular telephony and/or 802.16-compatible transceivers) wireless communications transceivers as desired. These teachings will also accommodate the apparatus 100 having more than one wireless communications interface 104. For example, the apparatus 100 may include a cellular telephony transceiver to facilitate long-range communications in addition to a BLUETOOTH^{™} transceiver to facilitate local communications with a nearby video-playback platform.

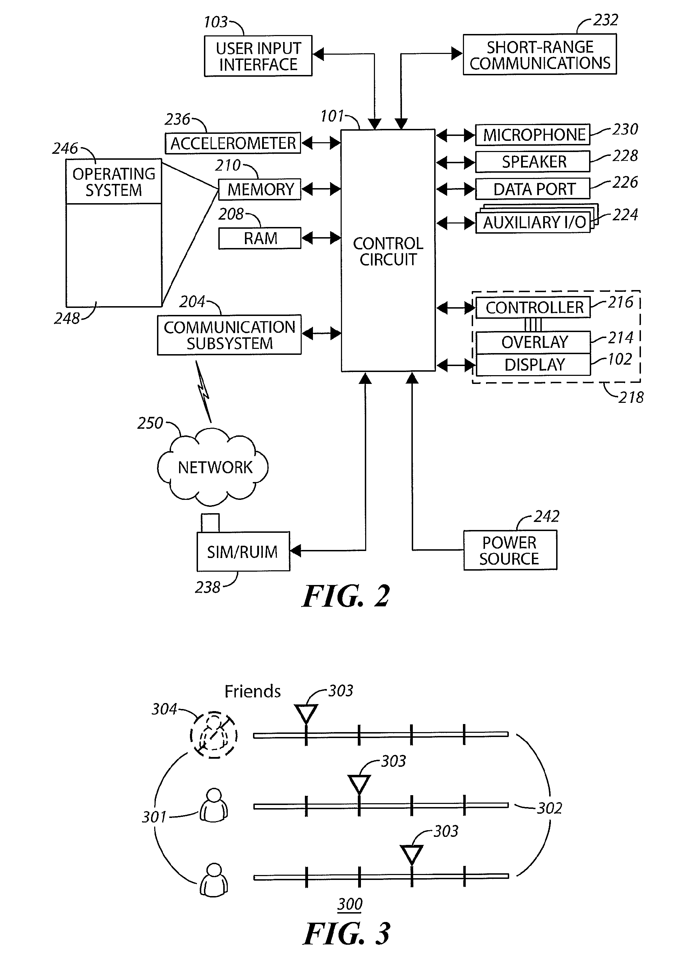

Such an apparatus 100 can comprise a portable electronic device such as, but not limited to, a so-called smartphone or a table-styled computer (such as a PLAYBOOK^{™}). Without intending any particular limitations by virtue of the specifics of the following example, FIG. 2 provides an illustrative portable electronic device in these regards.

In this illustrative example, many communication functions, including data and voice communications, are performed through a communication subsystem 204. The communication subsystem receives messages from and sends messages to a wireless network 250. The wireless network 250 may be any type of wireless network, including, but not limited to, data wireless networks, voice wireless networks, and networks that support both voice and data communications.

A power source 242, such as one or more rechargeable batteries or a port to an external power supply, powers the electronic device. If desired, the control circuit 101 may interact with an accelerometer 236 to facilitate detecting the direction of gravitational forces or gravity-induced reaction forces.

The control circuit 101 interacts with a variety of other elements, such as a Random Access Memory (RAM) 208, a memory 210, the aforementioned display 102 along with a touch-sensitive overlay 214 operably coupled to an electronic controller 216 that together comprise an optional touch-sensitive display 218, an auxiliary input/output (I/O) subsystem 224, a data port 226, a speaker 228, a microphone 230, a short-range communication subsystem 232 (such as, for example, a BLUETOOTH^{™}-compatible transceiver), and the aforementioned user input interface 103 (which may or may not comprise a stand-alone component as compared to any of the foregoing components as desired).

As regards the aforementioned touch-sensitive display 218, user input can be provided via the touch-sensitive overlay 214. The control circuit 101 interacts with the touch-sensitive overlay 214 via the electronic controller 216. Information, such as text, characters, symbols, images, icons, and other items that may be displayed or rendered on the touch-sensitive display 218 via the control circuit 101.

To identify a subscriber for network access, the portable electronic device may utilize a Subscriber Identity Module or a Removable User Identity Module (SIM/RUIM) card 238 for communication with a network, such as the wireless network 250. Alternatively, user identification information may be programmed into the memory 210.

The portable electronic device includes an operating system 246 and software programs, applications, or components 248 that are executed by the control circuit 101 in this illustrative example and are typically stored in a persistent, updatable store such as the illustrated memory 210. The memory 210 may comprise a non-transitory storage media that stores executable code which, when executed, causes one or more of functions or actions as described herein. Additional applications or programs may be loaded onto the portable electronic device through the wireless network 250, the auxiliary I/O subsystem 224, the data port 226, and/or the short-range communications subsystem 232.

A received signal such as a text message, an e-mail message, or web page download is processed by the communication subsystem and input to the control circuit 101. The control circuit 101 processes the received signal for output to the display 212 and/or to the auxiliary I/O subsystem 224. A subscriber may generate data items, for example e-mail messages, which may be transmitted over the wireless network 250 through the communication subsystem. For voice communications, the overall operation of the portable electronic device is similar. The speaker 228 outputs audible information converted from electrical signals, and the microphone 230 converts audible information into electrical signals for processing.

Referring again to FIG. 1, by one approach the apparatus 100 operates in conjunction with a physically and logically discrete apparatus 105. Generally speaking, in many application settings this physically and logically discrete apparatus 105 includes a display 106 to present video content of choice. This video content can comprise any video content of choice including live, commercial television broadcasts, streaming content, and so forth. Though not a requirement, the display 106 of this physically and logically discrete apparatus 105 will typically be larger than the apparatus's display 102 and hence, when available, will likely comprise a preferred viewing platform as compared to the apparatus 100.

As used herein, this reference to "physically and logically discrete" will be understood to refer to platforms that do not share a common housing or chassis and that do not share a single operating system. This is not to say, however, that one such platform cannot be physically tethered to the other (for example, via an HDMI cable, a USB connection, and so forth), or that the two platforms cannot communicate with one another, or that one of the platforms cannot engage in a specific function under the remote control of the other.

Pursuant to these teachings, as a video plays on the physically and logically discrete apparatus 105, the control circuit 101 provides information on the display 102 as regards that video. These teachings are very flexible in these regards and a number of specific examples are provided below. It will be understood that no particular limitations are intended by way of the specifics of these examples.

As a first example, FIG. 3 illustrates that the control circuit 101 can cause a display of information 300 regarding a plurality of contacts who correspond to a user of the apparatus 100. (As used herein, this reference to "contacts who correspond to a user" will be understood to refer to entities, such as individual persons, with whom the user has a pre-established communicative relationship. Accordingly, this expression will be understood to not include strangers with whom the user does not already have some social arrangement. Examples of such a contact include, but are certainly not limited to, FACEBOOK^{™} friends, LINKEDIN^{™} connections, BLACKBERRY MESSENGER^{™} (BBM), and so forth.)

In this example, a small icon 301 represents each displayed contact. These icons 301 can be preassigned by the user and/or can be self-designated by each corresponding contact as desired. These icons 301 can comprise, for example, thumbnail photographic images, cartoon avatars, and so forth. If desired, a name or other moniker for some or all of the contacts can be displayed as well, in lieu of such icons 301 or in combination therewith.

Each icon 301 (and hence each contact) has a meter 302 associated therewith that represents the total duration of the video being rendered by the physically and logically discrete apparatus 105 (and possibly, if desired, by the apparatus 100 itself as well). An indicator 303 for each contact in turn represents an extent to which each of the contacts has also viewed the video. For example, in this illustrative example one of the contacts has watched about 1/4^{th} of the video, another has watched about ½ of the video, and the third has watched about 3/4^{th} of the video.

When the number of contacts exceeds the size of the display 102 (or at least exceeds the size of a window that the control circuit 101 dedicates to such content), these teachings will readily accommodate the use of scrolling. As used herein, the term "scrolling" refers to an act of advancing a plurality of items, such as icons displayed in a list format, wherein the total amount of items may not be viewable on a display screen at the same time. The items may be advanced on a line-by-line, row-by-row, column-by-column, or page-by-page basis as desired.

As discussed herein, these teachings will accommodate receiving video annotations from these various contacts. It is possible, however, that a given user may wish to not receive, process, and/or presently display video annotations from one or more specific contacts at a particular time. To accommodate such a situation, these teachings will permit the user to select a particular contact to be at least temporarily muted/silenced in these regards. This might comprise, for example, tapping on the corresponding icon 301 to bring up a submenu that offers this option for selection. In turn, these teachings will accommodate providing a corresponding visual indication 304 of this silenced state to permit the user to see at a glance which contacts, if any, are so silenced. This silenced state, of course, can be lifted using similar approaches.

As noted earlier, the control circuit 101 can be configured to receive video-annotation information from a user of the apparatus 101 (via, for example, the aforementioned user input interface 103) regarding the video while the video is being rendered on the physically and logically discrete apparatus 105. These teachings will accommodate a wide variety of video-annotation information including, without limitation, text, files (for example, image files (such as but not limited to .jpg, .bit, or .pdf formatted files), audio files (such as but not limited to .wav or .mp3 formatted files, and so forth), selected graphic elements, Internet address links (such as Uniform Resource Locators (URLs)), and so forth. By one approach, the control circuit 101 displays some or all of the entered video-annotation information on the apparatus' display 102 as the user enters the information.

The control circuit 101 can then store the entered video-annotation information for future reference. This storing can comprise storing the information locally (i.e., at the apparatus 100 itself) and/or remotely (i.e., at a remotely-located server, data-storage facility, and so forth). These teachings will also accommodate, however, having the control circuit 101 transmit the received video-annotation information via the wireless communication interface 104. The transmitted information can then be distributed, more or less in real time, to all or selected ones of the user's aforementioned contacts. For example, the control circuit 101 can transmit the video-annotation information to one or more cloud resources that then download that information to the contacts upon user request, for example, or as an automatic response to when a given contact begins to stream the corresponding video. Using this approach the contacts will then be able to receive and consume the user's video-annotation information.

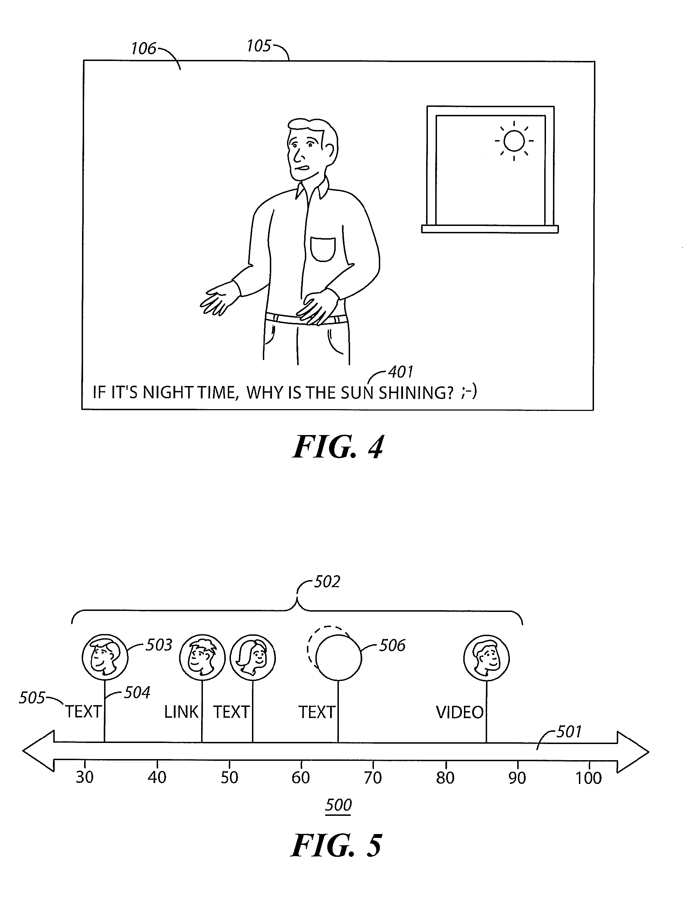

Similarly, the control circuit 101 can receive video-annotation information regarding the video from one or more of the aforementioned contacts via the wireless communications interface 104 while the video is being rendered on the physically and logically discrete apparatus 105. The control circuit 101 can then cause the received video-annotation information to be displayed in conjunction with that rendering of the video. By one approach, this displaying can comprise displaying the video-annotation information on the apparatus's display 102. By another approach, and as shown in FIG. 4, in lieu of the foregoing or in combination therewith, this displaying can comprise displaying part or all of the video-annotation information 401 in combination with the rendering of the video on the physically and logically discrete apparatus 105.

These teachings will further accommodate synchronizing the presentation of such received video-annotation information to particular corresponding times during the rendering of the video. For example, if a contact enters as video-annotation information the text "If it's nighttime, why is the sun shining? ;-)" 401 at a point in time that is thirty-seven minutes and fifteen seconds into the rendering of the video, the control circuit 101 can wait to present that video-annotation information (even if earlier received from a contact who has already reached that point in the video) until the present rendering of the video reaches that point in time. The present teachings are again quite flexible in these regards, however, and will accommodate, for example, displaying the annotation for N seconds prior to and/or N seconds after the point in the video where it was added. In such a case, if desired, the annotation can include an opportunity for the user to close the annotation and remove it from view. This opportunity could comprise, for example, a small box that contains an "X."

It is of course possible that some contacts have already watched a greater portion of the video than the user (and have perhaps even concluded their viewing of the entire video). It is also possible that other contacts lag the user's viewing. To facilitate finding video-annotation information in such a dynamic application setting, these teachings will further accommodate having the control circuit 101 present a display 500 (see FIG. 5) (on the apparatus's display 102) that depicts where different video annotations are included in the video.

In this illustrative example the display 500 includes a time line 501 for the entire video. Corresponding markers 502 indicate these various video annotations. These markers 502 can include, for example, an identifier 503 for the corresponding contact (such as a thumbnail image, name, or the like) along with a line 504 to indicate with precision the time-line 501 location and information 505 regarding the type of information (such as text, audio, image, and so forth). So configured, the user can readily find video-annotation information as provided by a plurality of different contacts, at times both preceding and following the user's own present rendering of the video. If desired, this video-annotation information can include read/unread (or viewed/unviewed) indicators to easily inform the user as to the corresponding state of each such item.

Upon detecting a user's selection of a particular video-annotation location (for example, by detecting a user's double tapping on a given one of the markers 502), the control circuit 101 can responsively cause the rendering of the video on the physically and logically discrete apparatus 105 to switch to the selected particular video-annotation location. This switched rendering of the video can then also be accompanied by a depiction/presentation of the corresponding video-annotation information as well per the foregoing.

As noted above, the present teachings are highly flexible in practice. Accordingly, by one approach the control circuit 101 can be further configured to manage a wireless text-based chat capability regarding the video. This capability would permit the contacts to chat amongst themselves without regard to synchronizing their inputs to specific times during the rendering of the video. Accordingly, and by way of a simple example, one contact could advise the other contacts via "chat" that they are now almost done watching the move and the other contacts would see that chat input notwithstanding that they are presently watching earlier portions of the video.

By one approach, this chat opportunity can be enriched by permitting, for example, a user to refer to a given annotation that includes a self-referencing link. Chat recipients could then select that annotation/link and be taken immediately to that point in the video. By another approach, alone or in combination with the foregoing, a chat input that corresponds to a particular point in the video could include an appropriate corresponding visual reference such as a thumbnail image of the corresponding frame. Such an image could be presented, for example, at the top of the chat message/window.

As another example of the flexibility of these teachings, the aforementioned video can be sourced in a variety of ways. By one approach, for example, the physically and logically discrete apparatus 105 receives the video from a source that is distinct from the apparatus 100 itself. In this case, the apparatus 100 may simultaneously receive other information from that same source to permit the control circuit 101 to conduct its functionality in synchronism with the playback of the video. Or, if desired, the physically and logically discrete apparatus 105 can transmit information to the control circuit 101 regarding the playback of the video to accomplish much the same purpose.

As another approach, however, these teachings will accommodate having the apparatus 100 itself source the video content. This sourcing might comprise, for example, coupling the physically and logically discrete apparatus 105 to the apparatus 100 using an HDMI cable to carry the video content. This might also comprise, by way of another example, using a wireless path (such as BLUETOOTH^{™} or Wi-Fi channel) to carry the video content to the physically and logically discrete apparatus 105.

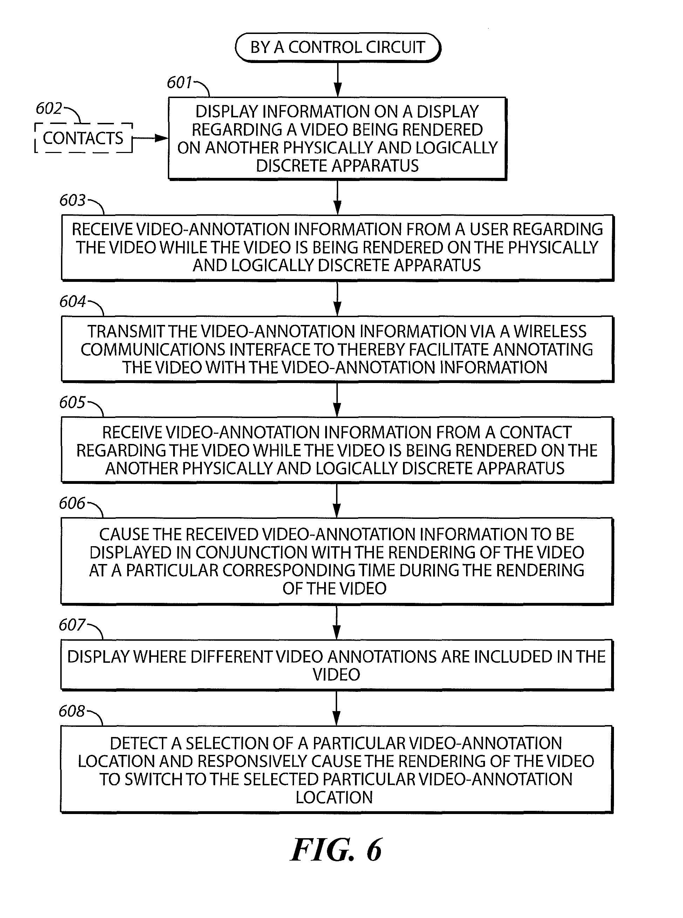

So configured, these teachings permit a user and a known collection of social contacts to share in a highly interactive and intuitive way with one another while watching videos (either at the same time, nearly at the same time, or at completely separate times as the case may be). By way of an illustrative example and without intending any corresponding limitations by way of the specificity of this example, FIG. 6 illustrates that such a control circuit 101 can, at 601, display information on a display regarding a video that is being presently rendered on another physically and logically discrete apparatus. By one approach at least some of this displayed information comprises information regarding at least one of a plurality of contacts 602 who correspond to the user.

At 603 the control circuit 101 can receive video-annotation information from the user regarding the video while the video is being rendered on the physically and logically discrete apparatus and at 604 can then transmit the video-annotation information via a wireless communications interface to thereby facilitate annotating the video with this video-annotation information.

At 605 the control circuit 101 can receive video-annotation information from a contact 602 of the user via the wireless communications interface regarding the video while the video is being rendered on the physically and logically discrete apparatus and at 606 can cause that video-annotation information to be displayed in conjunction with the rendering of the video at a particular corresponding time during the rendering of the video.

At 607 the control circuit 101 can depict on a display where different ones of the aforementioned video annotations are included in the video. The control circuit 101 can then detect a selection of a particular video-annotation location and responsively cause the rendering of the video to switch to the selected particular video-annotation location.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus (100) comprising:
a display (102);
a user input interface (103);
a wireless communications interface (104); and
a control circuit (101) operably coupled to the display, the user input interface, and the wireless communications interface and configured to:
display (601) information on the display regarding a video being rendered on another physically and logically discrete apparatus (105).

2. The apparatus of claim 1 wherein the apparatus comprises a portable communications device.

3. The apparatus of claim 1 wherein the physically and logically discrete apparatus comprises one of:
a broadcast television receiver; and
a standalone computer.

4. The apparatus of claim 1 wherein the information on the display comprises information regarding at least one of a plurality of contacts (602) who correspond to a user of the apparatus.

5. The apparatus of claim 4 wherein the information regarding the plurality of contacts represents (303) an extent to which each of the contacts has also viewed the video.

6. The apparatus of claim 1 wherein the control circuit is further configured to:
receive (603) video-annotation information from a user of the apparatus via the user input interface regarding the video while the video is being rendered on the another physically and logically discrete apparatus.

7. The apparatus of claim 6 wherein the control circuit is further configured to:
transmit (604) the video-annotation information via the wireless communications interface to thereby facilitate annotating the video with the video-annotation information.

8. The apparatus of claim 7 wherein the video-annotation information comprises at least one of:
text;
a file;
a graphic element; and
a link.

9. The apparatus of claim 1 wherein the control circuit is further configured to:
receive (605) video-annotation information from a contact of a user of the apparatus via the wireless communications interface regarding the video while the video is being rendered on the another physically and logically discrete apparatus; and
cause (606) the video-annotation information to be displayed in conjunction with the rendering of the video at a particular corresponding time during the rendering of the video.

10. The apparatus of claim 9 wherein the control circuit is configured to:
cause the video-annotation information to be displayed in conjunction with the rendering of the video by causing at least part of the video-annotation information to be displayed on the another physically and logically discrete apparatus.

11. The apparatus of claim 9 wherein the control circuit is configured to:
selectively refrain from displaying video-annotation information from a particular contact as identified by the user via the user input interface while continuing to display video-annotation information from another contact.

12. The apparatus of claim 1 wherein the control circuit is configured to:
depict (607) on a display where different video annotations are included in the video.

13. The apparatus of claim 12 wherein the different video annotations are provided by a plurality of different contacts who correspond to a user of the apparatus.

14. The apparatus of claim 12 wherein the control circuit is configured to:
detect (608) a selection of a particular video-annotation location and responsively cause the rendering of the video to switch to the selected particular video-annotation location.

15. The apparatus of claim 1 wherein the control circuit is configured to:
manage a wireless text-based chat capability regarding the video.
